# FASCICULE DE BREVET EUROPEEN

(11) **EP 2 033 731 B1**
(45) Date de publication et mention de la délivrance du brevet: **23.02.2011**
(21) Numéro de dépôt: 08164001.3
(22) Date de dépôt: 09.09.2008
(51) Int. Cl.: B23K 9/167, B23K 9/235

(54) **Utilisation d'un flux activant pour le soudage tig de pièces métalliques**
Verwendung eines Aktivierungsflusses zum WIG-Schweißen von Metallteilen
Use of an activating flux for TIG welding of metal parts

(30) Priorité: 10.09.2007 FR 0706332
(43) Date de publication de la demande: 11.03.2009
(73) Titulaire: SNECMA, 75015 Paris (FR)
(72) Inventeur: Gueguen, Mathieu, 75012 Paris (FR); Moreau, John, 94490 Ablon sur Seine (FR); Souillier, David, Daniel, 77190 Dammarie les Lys (FR)
(74) Mandataire: David, Daniel

(56) Documents cités:
- EP-A- 1 419 842
- EP-A- 1 584 402

## Description

L'invention concerne le soudage de pièces métalliques notamment dans le domaine aéronautique et plus particulièrement dans celui des moteurs à turbine à gaz.

Le soudage de type TIG (Tungsten Inert Gas) permet de souder des pièces métalliques au moyen d'un arc électrique. Le soudage TIG est un procédé de soudage à l'arc avec une électrode non fusible.

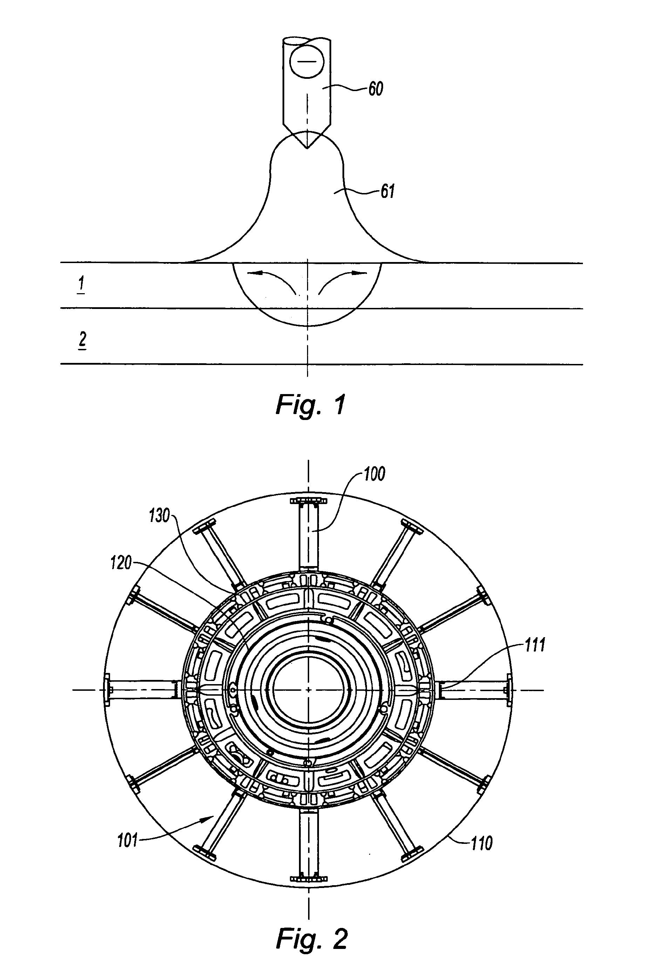

En référence à la figure 1, un arc électrique 61 se crée entre une torche de soudage 60, dont le potentiel est négatif, et une première pièce métallique 1, dont le potentiel est positif. La première pièce 1 est en contact avec une deuxième pièce 2 à laquelle on veut la souder. La torche de soudage 60 est amenée à proximité de la première pièce 1, la différence de potentiel créant un arc électrique 61. L'énergie fournie par l'arc élève la température des pièces 1, 2 entraînant leur fusion locale et leur soudage lors de leur refroidissement. Cependant, lorsque les pièces possèdent une épaisseur importante, la pénétration de la chaleur peut ne pas être suffisante, empêchant un soudage efficace.

Lorsque l'épaisseur n'est pas constante, le soudage entraîne une variation de la qualité du soudage, le soudage pouvant être globalement de bonne qualité sur les zones de faible épaisseur et, inversement, de mauvaise qualité sur les zones de forte épaisseur.

Il est possible d'augmenter la puissance de l'arc pour améliorer le soudage de zones de fortes épaisseurs. Cependant, le passage d'une torche de soudage, paramétrée à forte puissance, sur une zone de faible épaisseur peut déformer la pièce à cause d'une pénétration trop importante de la chaleur dans ladite pièce. La pièce ainsi déformée ne peut pas être réparée et doit être mise au rebut.

Pour souder des pièces dont l'épaisseur n'est pas constante, on peut usiner un chanfrein au préalable sur les zones épaisses afin que la pièce soit d'épaisseur réduite et constante le long de la zone de soudage. Une fois les pièces soudées par application de l'arc de soudage, on réalise un apport de matière sur les pièces soudées afin de combler la matière enlevée lors du chanfreinage. Cette étape dite de remplissage permet aux pièces soudées de retrouver leur forme d'origine avant le chanfreinage.

Cette technique est actuellement mise en oeuvre pour le soudage de bras épais de carter intermédiaire de turboréacteur, cependant l'étape de préparation au soudage de ce type de pièces métalliques nécessite un travail important et long. De surcroît, à cause des contraintes thermiques, les pièces sont susceptibles de se déformer lors de l'opération de remplissage La mise en oeuvre de ce type de soudage est donc très lourde et peu adaptée à une production à l'échelle industrielle.

On connaît (voir EP-A-1 584 402 ou EP-A-1 419 842, pour améliorer la pénétration de la chaleur de soudage dans la pièce et donc permettre le soudage de pièces épaisses, un procédé de soudage à l'arc activant, dit soudage ATIG (Activ Tungsten inert Gas), consistant à déposer avant l'application de l'arc un flux de soudage pénétrant, ou activant, sur la pièce à souder, le flux étant composé principalement de chlorures et de fluorures. Ce flux influe directement sur la largeur de l'arc électrique par constriction ; pour une même énergie appliquée, il permet ainsi d'en accroître l'énergie surfacique et d'améliorer la pénétration de la chaleur dans les pièces.

Un tel flux pénétrant est bien connu de l'homme du métier sous ses dénominations commerciales telles que ELI TITANIUM. De manière classique, on enduit de flux la pièce épaisse à souder sur toute sa longueur, préalablement au passage de la torche de soudage.

Toutefois étant donné les coûts de fabrication élevés des pièces aéronautiques, le soudage ATIG est à la connaissance de la demanderesse peu utilisé dans ce domaine à cause des risques qu'il entraîne.

la demanderesse s'est fixé comme objectif d'améliorer la technique de soudage de pièces métalliques.

Elle propose un procédé de soudage de deux pièces métalliques, dans lequel :
- on positionne les pièces métalliques l'une contre l'autre dans une position de soudage, les pièces étant respectivement en contact surfacique selon leurs surfaces de soudage, au moins une des pièces présentant au moins une zone en surépaisseur le long de sa surface de soudage ;
- on réalise un soudage TIG des surfaces de soudage des pièces métalliques au moyen d'une torche de soudage TIG.

Ce procédé est caractérisé par le fait que l'on applique localement un flux de soudage pénétrant sur ladite zone en surépaisseur de la pièce métallique, préalablement à l'étape de soudage TIG, une portion de ladite surface de soudage restant dépourvu de flux pénétrant de soudage.

Le flux de soudage pénétrant a pour fonction de concentrer localement l'arc de soudage TIG au niveau de la seule zone en surépaisseur, la chaleur pénétrant en profondeur dans la pièce métallique.

Grâce à l'invention il n'est pas nécessaire de chanfreiner préalablement la pièce ce qui implique un gain de temps.

Les autres zones sont soudées de manière classique avec un apport d'énergie approprié sans risque de déformation de la pièce.

La soudure réalisée est ainsi homogène et indépendante des variations d'épaisseur.

De préférence, la torche de soudage TIG fonctionne à puissance constante au cours de l'étape de soudage TIG.

La puissance ou intensité de soudage étant indépendante de l'épaisseur de la pièce le procédé de l'invention permet d'accélérer l'étape de soudage TIG.

De préférence, on applique un masque sur la pièce métallique, agencé de manière à permettre le dépôt du flux de soudage pénétrant de manière précise sur la zone en surépaisseur de la pièce métallique.

Le masque permet de répéter l'opération en série sur de nombreuses pièces en conservant la même qualité de soudage.

Selon une mise en oeuvre du procédé, la torche de soudage TIG est déplacée selon une première vitesse sur la zone enduite et selon une deuxième vitesse sur les zones dépourvues de flux de soudage pénétrant, les première et deuxième vitesses étant constantes.

Dans la mesure où on ménage une zone de transition entre la zone enduite et une zone adjacente dépourvue de flux de soudage pénétrant, on déplace la torche de soudage TIG à une vitesse différente aux dites premières et deuxième vitesses sur la zone de transition.

Le cas échéant, on réalise une étape de décapage mécanique après que les pièces ont été soudées, le décapage permettant d'éliminer toute trace résiduelle du flux de soudage pénétrant.

D'autres caractéristiques et avantages ressortiront de la description qui suit du procédé de l'invention en référence aux figures sur lesquelles :
- la figure 1 représente un soudage à l'arc TIG selon un procédé de l'art antérieur;
- la figure 2 représente une vue depuis l'arrière d'un carter intermédiaire de turbomoteur;
- la figure 3 représente une vue en perspective d'une partie d'un bras radial du carter intermédiaire du turbomoteur de la figure 2 préparé pour un soudage selon l'art antérieur;
- la figure 4 montre le bras de la figure 3 en coupe selon la direction 4-4 ;
- la figure 5 représente une vue en perspective du bras radial préparé pour un soudage selon l'invention, le bras étant recouvert d'un flux de soudage pénétrant sur sa partie en surépaisseur; et
- la figure 6 montre le bras de la figure 5 vu en coupe selon la direction 6-6 ;
- la figure 7 représente le soudage du bras de la figure 5 au moyen d'une torche de soudage selon le procédé de l'invention.

L'invention concerne en particulier le soudage des bras radiaux dans un carter intermédiaire de moteur à turbine à gaz à double flux. La figure 2 représente un carter intermédiaire avec une virole externe 111, un élément de carter inter-veine 130 - c'est-à-dire 1' élément de carter entre la veine de flux primaire et la veine de flux secondaire - et un moyeu 120 réalisés en un alliage à base de titane. Des bras radiaux de liaison 100 relient entre eux ces différents éléments de carter. En fabrication, l'assemblage de cette pièce complexe comprend le soudage des bras radiaux 100 aux éléments de carter 120 et 111.

L'invention va être décrite en se référant plus particulièrement au soudage entre l'extrémité interne 101 d'un bras de liaison 100 et un élément 111 solidaire de la virole interne 120.

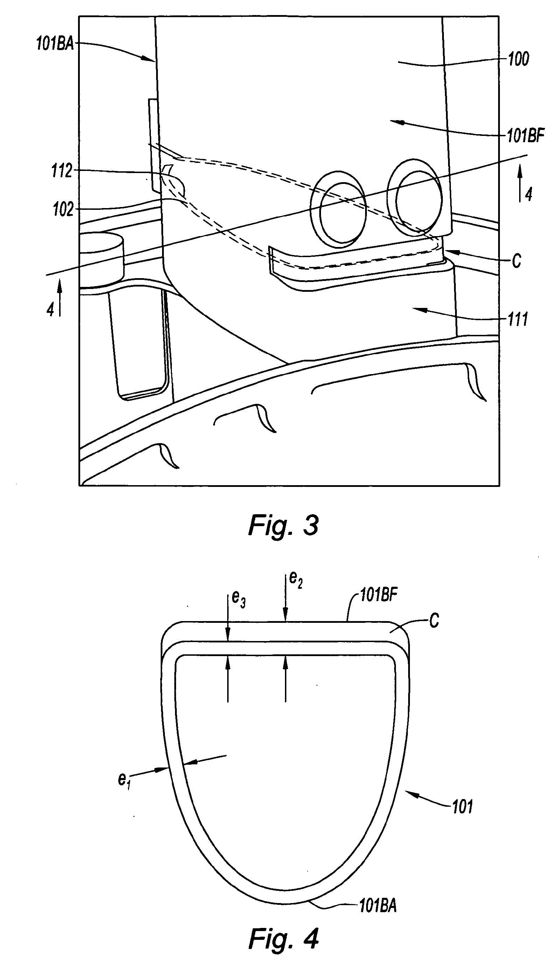

En référence aux figures 3 et 4, le bras radial de liaison 100 se présente sous la forme d'une pièce allongée et creuse dans la direction radiale, avec un profil aérodynamique présentant une bord d'attaque arrondi 101BA et un dos plan 101BF perpendiculaire à la direction du flux d'air à l'aval. L'épaisseur du bras 100 n'est pas constante le long de sa périphérie et son épaisseur évolue entre 2,5 mm et 7 mm. L'épaisseur e1 est plus faible latéralement et est maximale e2 au dos 101BF. La surface transversale à l'extrémité radiale 101 du bras 100 est désignée section de soudage 102. Le bras de liaison 100 est dans une position de soudage avec l'élément 111 solidaire de la virole externe 120 et qui s'en étend radialement, la section de soudage 102 du bras de liaison 100 s'appuyant contre la surface de soudage 112 définie sur l'élément 111.

Sur cette figure 3 ou 4, on voit la mise en oeuvre de la technique de l'art antérieur. Elle a consisté à usiner un chanfrein C dans la paroi du dos 101BF de telle façon que l'épaisseur e3 à souder soit réduite en cet endroit. e3 est sensiblement égale à e1. Cette technique permet un soudage de bonne qualité car les conditions restent les mêmes tout le long de la soudure. Il faut après soudage combler la zone usinée pour reconstituer le profil aérodynamique. On comprend cependant que l'opération est globalement longue et délicate.

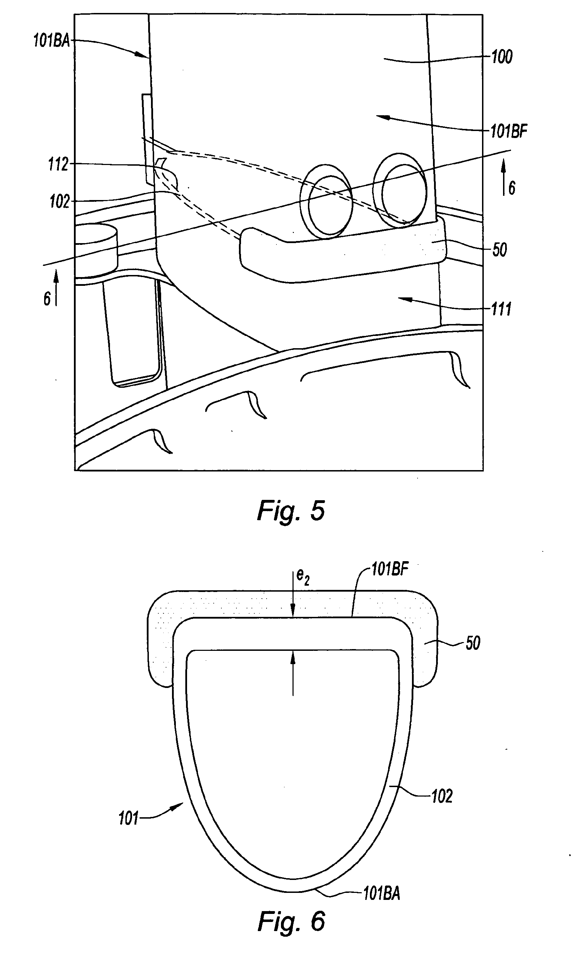

Sur les figures 5 et 6, on a représenté les mêmes pièces mais préparées selon l'invention. Au lieu de procéder à un usinage, on a appliqué un flux de soudage pénétrant sur la zone épaisse du bras, qui correspond sensiblement à la zone que l'on usinait selon l'art antérieur. Cette zone s'étend sur la largeur du dos 101BF en débordant sur les parois latérales. Le flux de soudage pénétrant forme un bourrelet 50.

Pour la mise en place du flux, on met en position le bras sur l'élément 111 et on en recouvre la surface extérieure avec un masque dans la partie d'épaisseur faible.

On applique ensuite un flux de soudage pénétrant 50 au moyen d'un aérosol ou d'un pinceau sur la surface extérieure à cheval entre le bras de liaison 100 et l'élément 111.

Ce flux de soudage pénétrant 50 est bien connu de l'homme du métier sous sa dénomination commerciale telle que ELI TITANIUM.

Une fois le bras 100 enduit de flux 50, on retire le masque.

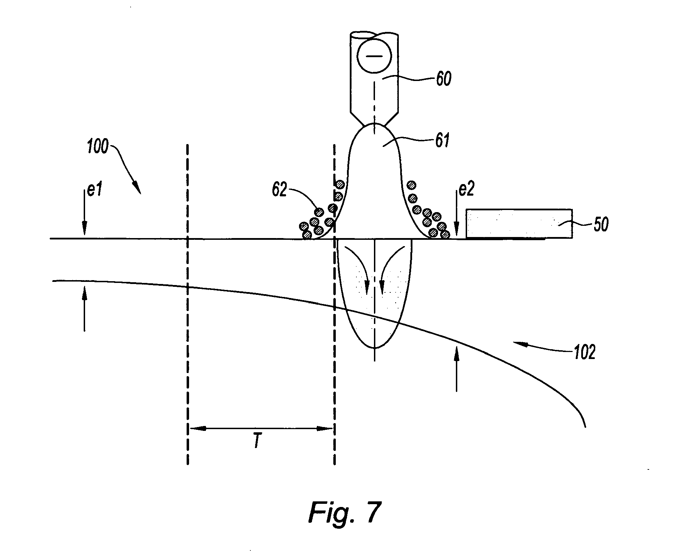

En référence à la figure 7, on approche une torche de soudage TIG 60 à proximité de la zone à souder, c'est-à-dire à l'interface entre le bras 100 et l'élément 111. Un arc électrique 61 est créé entre la torche de soudage 60 et la surface extérieure de l'assemblage.

Lorsque l'arc électrique 61 se forme entre la torche de soudage 60 et la portion fine du bras de liaison, dépourvue de flux de soudage pénétrant 50, la chaleur générée par l'arc 61 se propage sur quelques millimètres. La puissance est adaptée pour limiter les déformations.

Lorsque l'arc électrique 61 se forme entre la torche de soudage 60 et la portion épaisse du bras de liaison 100, recouverte du flux de soudage pénétrant 50, la chaleur générée par l'arc 61 se propage en profondeur sous l'action du flux pénétrant 50 et de ses particules 62 comme représenté sur la figure 7. L'épaisseur soudable est accrue par rapport à une portion fine dépourvue de flux de soudage pénétrant 50.

La concentration de la chaleur vient compenser l'augmentation de l'épaisseur locale, garantissant un soudage homogène du bras de liaison 100 sur l'élément de virole. Un soudage homogène limite les risques de rupture de l'assemblage au niveau du joint de soudure.

Le passage de la torche 60 sur le bras est réalisé en continu. La torche de soudage TIG est déplacée selon une première vitesse sur les zones enduites et selon une deuxième vitesse sur les zones dépourvues de flux de soudage pénétrant, les première et deuxième vitesses étant constantes.

On paramètre la vitesse de déplacement de la torche de soudage 60 pour qu'elle diminue lorsque l'arc électrique 61 approche d'une transition (T) entre une portion épaisse et une portion fine de la section de soudage, de manière à augmenter localement l'énergie surfacique dans la zone de transition (T) comme représenté sur la figure 7.

La torche 60 est commandée de manière automatisée ce qui diminue le temps de soudage et facilite la reproductibilité du soudage sur chacun des bras de liaison 100.

Lorsque l'étape de soudage TIG est terminée, on réalise une étape de finition permettant de lisser la pièce en remplissant les creux apparus éventuellement par endroits. Une telle étape de finition ne nécessite pas de nettoyer préalablement les pièces 100, 111. Le flux résiduel 50, brûlé ou non lors de l'étape de soudage, est enlevé par décapage mécanique.

## Revendications

1. Procédé de soudage de deux pièces métalliques (100, 111), dans lequel :
- on positionne les pièces métalliques (100, 111) l'une contre l'autre dans une position de soudage, les pièces (100, 111) étant respectivement en contact surfacique selon leurs surfaces de soudage (102, 112), au moins une des pièces (100, 111) présentant au moins une zone en surépaisseur le long de sa surface de soudage (102, 112);
- on réalise un soudage TIG des surfaces de soudage (v) des pièces métalliques (100, 111) au moyen d'une torche de soudage TIG (60), procédé **caractérisé par le fait que** l'on applique localement un flux de soudage pénétrant (50) sur ladite zone en surépaisseur de la pièce métallique (111) préalablement a l'étape de soudage TIG une portion de ladite surface de soudage restant dépourvue de flux de soudage pénétrant.

2. Procédé selon la revendication 1, dans lequel la torche de soudage TIG (60) fonctionne à puissance constante au cours de l'étape de soudage TIG.

3. Procédé selon l'une des revendications 1 à 2, dans lequel on applique un masque sur la pièce métallique (111), agencé de manière à permettre le dépôt du flux de soudage pénétrant (50) de manière précise sur la zone en surépaisseur de la pièce métallique (111).

4. Procédé selon l'une des revendications 1 à 3, dans lequel on déplace la torche de soudage TIG (60) selon une première vitesse sur la zone enduite et selon une deuxième vitesse sur les zones dépourvues de flux de soudage pénétrant (50), les première et deuxième vitesses étant constantes.

5. Procédé selon la revendication 4, dans lequel on déplace la torche de soudage TIG (60) à une vitesse différente aux dites première et deuxième vitesse sur une zone de transition entre la zone enduite et une zone adjacente, dépourvue de flux de soudage pénétrant (50).

6. Procédé selon l'une des revendications 1 à 5, dans lequel on réalise une étape de décapage mécanique des pièces soudées (100, 111), le décapage permettant d'éliminer toute trace résiduelle du flux de soudage pénétrant (50).

## Claims

1. A method for welding two metal parts (100,111), in which:
- the metal parts (100,111) are positioned against each other in a welding position (100,111), the parts being respectively in surface contact along their welding surfaces (102,112), at least one of the parts (100, 111) having at least one extra-thick zone along its welding surface (102,112);
- TIG welding is carried out on the welding surfaces (v) of the metal parts (100, 111) by means of a TIG (60) welding torch, a method in which
- a penetrating welding flux (50) is applied locally on said extra-thick zone of the metal part (111) prior to the TIG welding step.

2. The method as claimed in claim 1, in which the TIG welding torch (60) operates at a constant power during the TIG welding step.

3. The method as claimed in claim 1, in which a mask is applied to the metal part (111), arranged so as to allow the penetrating welding flux (50) to be deposited in a precise manner over the extra-thick zone of the metal part (111).

4. The method as claimed in claim 1, in which the TIG welding torch (60) is moved at a first speed along the coated zone and at a second speed over zones lacking penetrating welding flux (50), the first and second speeds being constant.

5. The method as claimed in claim 4, in which the TIG welding torch (60) is moved at a speed different from said first and second speeds over a transition zone between the coated zone and an adjacent zone lacking the penetrating welding flux (50).

6. The method as claimed in claim 1, in which a mechanical scouring step is carried out on the welded parts (100, 111), scouring enabling any residual trace of penetrating welding flux to be removed (50).

## Patentansprüche

1. Verfahren zum Verschweißen von zwei Metallteilen (100, 111), wobei
- die Metallteile (100, 111) in einer Schweißposition gegeneinander positioniert werden, wobei sich die Teile (100, 111) jeweils an ihren Schweißflächen (102, 112) in Oberflächenkontakt befinden, wobei mindestens eines der Teile (100, 111) mindestens einen Bereich mit Überdicke an seiner Schweißfläche (102, 112) entlang aufweist;
- ein WIG-Schweißen der Schweißflächen (v) der Metallteile (100, 111) mittels einer WIG-Schweißlampe (60) durchgeführt wird,
wobei das Verfahren **dadurch gekennzeichnet ist, dass** vor dem Schritt des WIG-Schweißens lokal ein durchdringendes Flussmittel (50) auf den Bereich mit Überdicke des Metallteils (111) aufgetragen wird, wobei ein Teil der Schweißfläche frei von durchdringendem Flussmittel bleibt.

2. Verfahren nach Anspruch 1, wobei die WIG-Schweißlampe (60) während des Schrittes des WIG-Schweißens mit konstanter Leistung funktioniert.

3. Verfahren nach einem der Ansprüche 1 bis 2, wobei auf das Metallteil (111) eine Maske angelegt wird, die derart angeordnet ist, dass sie das Abscheiden des durchdringenden Flussmittels (50) genau auf den Überdickenbereich des Metallteils (111) ermöglicht.

4. Verfahren nach einem der Ansprüche 1 bis 3, wobei die WIG-Schweißlampe (60) auf dem bedeckten Bereich mit einer ersten Geschwindigkeit und auf den Bereichen ohne durchdringendes Flussmittel (50) mit einer zweiten Geschwindigkeit bewegt wird, wobei die ersten und zweiten Geschwindigkeiten konstant sind.

5. Verfahren nach Anspruch 4, wobei die WIG-Schweißlampe (60) mit einer anderen Geschwindigkeit als den ersten und zweiten Geschwindigkeiten über einen Übergangsbereich zwischen dem bedeckten Bereich und einem angrenzenden Bereich ohne durchdringendes Flussmittel (50) bewegt wird.

6. Verfahren nach einem der Ansprüche 1 bis 5, wobei ein Schritt des mechanischen Entzunderns der geschweißten Teile (100, 111) durchgeführt wird, wobei es die Entzunderung ermöglicht, alle restlichen Spuren des durchdringenden Flussmittels (50) zu beseitigen.
